# EUROPÄISCHE PATENTSCHRIFT

(11) **EP 3 279 441 B1**
(45) Veröffentlichungstag und Bekanntmachung des Hinweises auf die Patenterteilung: **28.10.2020**
(21) Anmeldenummer: 17001248.8
(22) Anmeldetag: 21.07.2017
(51) Int. Cl.: F01N 9/00, F01N 3/021

(54) **VERFAHREN ZUR ANPASSUNG EINES STEUERGERÄTS AN EINEN AN DAS STEUERGERÄT ANSCHLIESSBAREN RUSSSENSOR**
METHOD FOR ADAPTING A CONTROL DEVICE TO A SOOT SENSOR WHICH CAN BE CONNECTED TO THE CONTROL DEVICE
PROCÉDÉ D'ADAPTATION D'UN APPAREIL DE COMMANDE À UN CAPTEUR DE SUIE POUVANT ÊTRE RELIÉ À L'APPAREIL DE COMMANDE

(30) Priorität: 03.08.2016 DE 102016009456
(43) Veröffentlichungstag der Anmeldung: 07.02.2018
(73) Patentinhaber: MAN Truck & Bus SE, 80995 München (DE)
(72) Erfinder: Hofmann, Alexander, 90475 Nürnberg (DE); Reichert, Sebastian, 91448 Emskirchen (DE)
(74) Vertreter: Liebl, Thomas

(56) Entgegenhaltungen:
- EP-A1- 2 993 321
- DE-A1-102012 018 280
- US-A1- 2010 049 462

## Beschreibung

Die Erfindung betrifft ein Verfahren zur Anpassung eines Steuergeräts an einen an das Steuergerät angeschlossenen oder anzuschließenden Rußsensor nach Patentanspruch 1, ein Steuergerät zur Überprüfung der Funktion eines Partikelfilters, insbesondere eines Dieselpartikelfilters, nach Patentanspruch 14, eine Vorrichtung zur Überprüfung der Funktion eines Partikelfilters, insbesondere eines Dieselpartikelfilters, nach Patentanspruch 15 sowie ein Fahrzeug, insbesondere ein Nutzfahrzeug, mit der Vorrichtung nach Patentanspruch 16.

Es ist bekannt, zur Überwachung der Funktion eines Partikelfilters eines an eine Brennkraftmaschine angeschlossenen Abgasstrangs, in Abgas-Strömungsrichtung gesehen, stromab des Partikelfilters einen Rußsensor anzuordnen, mittels dem der von dem Partikelfilter durchgelassene Rußmassenstrom ermittelt werden kann. Über den ermittelten, von dem Partikelfilter durchgelassenen Rußmassenstrom kann dann erfasst werden, ob der Partikelfilter defekt ist oder nicht. Gemäß Euro-6-Abgasnorm liegt dabei beispielsweise ein defekter Dieselpartikelfilter vor, wenn der auf die aufgewendete Antriebsleistung der Brennkraftmaschine bezogene, von dem Partikelfilter durchgelassene Rußmassenstrom einen Grenzwert von 25 mg/kWh überschreitet.

Die Messung des von dem Partikelfilter durchgelassenen Rußmassenstroms kann beispielsweise mit einem nach einem resistiven Messprinzip arbeitenden Rußsensor erfolgen, mittels dem der an dem Rußsensor vorbeiströmende Rußmassenstrom auf indirekte Weise bestimmt wird. Bei einem derartigen resistiven Rußsensor bzw. Partikelsensor sind wenigstens zwei voneinander beabstandete Elektroden vorgesehen, zwischen denen eine Rußsammelfläche angeordnet ist, an dem sich von dem Partikelfilter durchgelassene und somit hin zu dem Rußsensor strömende Rußpartikel ablagern bzw. ansammeln. Durch diese Ansammlung der elektrisch leitfähigen Rußpartikel an der Rußsammelfläche des Rußsensors wird eine elektrische Verbindung zwischen den Elektroden hergestellt, so dass zwischen den Elektroden elektrischer Strom fließen kann. Je mehr Rußpartikel sich dabei an der Rußsammelfläche des Rußsensors anlagern, desto geringer wird der elektrische Widerstand zwischen den Elektroden.

Ein derartiger resistiver Rußsensor ist beispielsweise aus der DE 10 2006 042 605 A1 bekannt. Diese Druckschrift offenbart ein Sensorelement für Gassensoren zur Bestimmung von Partikeln in Gasgemischen, bei dem wenigstens zwei dem Gasgemisch ausgesetzte Elektroden und ein diese Elektroden tragendes Substrat vorgesehen ist. Zwischen dem Substrat und den Elektroden ist dabei eine elektrisch leitfähige Unterlage vorgesehen, mittels der die Elektroden elektrisch leitend miteinander verbunden sind. Auf diese Weise wird eine Parallelschaltung der elektrischen Widerstände der leitfähigen Unterlage und der Schicht der auf den Elektroden abgeschiedenen Partikeln realisiert.

Obwohl von einer Vielzahl von Herstellern Rußsensoren hergestellt werden, die nach einem resistiven Messprinzip arbeiten, gibt es bisher noch keinen einheitlichen Standard für die Rußsensoren. Dadurch variieren die nutzbaren Ausgangssignale der verfügbaren Rußsensoren regelmäßig bezüglich physikalischer Einheit, Genauigkeit, Auflösung oder Messbereich. Bei einem Wechsel eines Sensorherstellers oder einer Verwendung eines anderen Sensortyps eines Sensorherstellers, beispielsweise aufgrund von Qualitätsproblemen mit dem bisherigen Rußsensor oder durch eine Risikominimierung mit Hilfe einer Zwei-Lieferanten-Strategie, ist es daher aufwendig, den neuen Sensor in das vorhandene Messsystem zu integrieren. Dabei kann es beispielsweise erforderlich sein, ein Steuergerät, mittels dem das Messsignal des Rußsensors verarbeitet und ausgewertet werden kann, mit einer neuen bzw. anderen Auswertungs-Software zu versehen. Das Aufspielen einer neuen Auswertungs-Software ist jedoch sehr umständlich und zeitaufwendig.

Aus der US 2010/0049462 A1 ist ein System bekannt, bei dem ein mit einem Brennkraftmaschinen-Abgas gekoppelter Filter vorgesehen ist, der in einem Sammel-Modus und in einem Regenerations-Modus betrieben werden kann. Zudem ist hier auch ein mit einem Sensor zur Erfassung der Konzentration der Rußpartikel im gefilterten Abgas gekoppelter Prozessor vorgesehen, mittels dem auf Basis eines ermittelten Grundniveaus und eines ermittelten Regenrationsniveaus für das Sensorsignal ein Kalibrierungswert für den Sensor ermittelt wird.

Aus der EP 2 993 321 A1 ist eine Diagnoseeinrichtung zur Überprüfung der Funktion eines Partikelfilters bekannt, mittels der auf Basis des Grads der Variation eines Ausgabewerts eines Rußsensors entschieden wird, ob ein Filter-Diagnoseverfahren durchgeführt wird oder nicht.

Aufgabe der Erfindung ist es, ein Verfahren zur Anpassung eines Steuergeräts an einen an das Steuergerät angeschlossenen oder anzuschließenden Rußsensor sowie ein Steuergerät und eine Vorrichtung zur Überprüfung der Funktion eines Partikelfilters, insbesondere eines Dieselpartikelfilters, bereitzustellen, mittels denen das Steuergerät auf besonders einfache und effektive Weise an einen an das Steuergerät angeschlossenen oder anzuschließenden Rußsensor angepasst werden kann.

Diese Aufgabe wird durch die Merkmale der unabhängigen Patentansprüche gelöst. Bevorzugte Weiterbildungen sind in den Unteransprüchen offenbart.

Gemäß Patentanspruch 1 wird ein Verfahren zur Anpassung eines Steuergeräts an einen an das Steuergerät anschließbaren Rußsensor vorgeschlagen, wobei der Rußsensor zur Überwachung der Funktion eines Partikelfilters, insbesondere eines Dieselpartikelfilters, eines mit einer Brennkraftmaschine verbundenen Abgasstrangs dient. Mittels des anschließbaren Rußsensors kann dabei der von dem Partikelfilter durchgelassene und somit an dem Rußsensor vorbeiströmende Rußmassenstrom bzw. Russmasse gemessen und/oder ermittelt werden. Das Steuergerät weist eine Signal-Verarbeitungseinrichtung mit einer Kennwert-Berechnungsfunktion auf, wobei mittels der Kennwert-Berechnungsfunktion aus dem ermittelten Rußmassenstrom und der, insbesondere mit dem Steuergerät ermittelten, eingesetzten Antriebsleistung der Brennkraftmaschine Ruß-Leistungs-Kennwerte ermittelt werden können, bei denen der von dem Partikelfilter durchgelassene Rußmassenstrom in Relation zur Brennkraftmaschinen-Antriebsleistung gesetzt ist, wobei mittels der Signal-Verarbeitungseinrichtung zudem ermittelt werden kann, ob die ermittelten Ruß-Leistungs-Kennwerte einen definierten Ruß-Leistungs-Grenzwert überschreiten. Zudem weist die Signal-Verarbeitungseinrichtung wenigstens eine Diagnosefunktion auf, mittels der die Funktion des Rußsensors überprüft werden kann, wobei die Signal-Verarbeitungseinrichtung weiter auch wenigstens eine Zustandsfunktion aufweist, mittels der der aktuelle Zustand des Rußsensors erfasst und wenigstens ein Steuerbefehl zur gezielten Ansteuerung des Rußsensors und somit zur Änderung des Zustands des Rußsensors ausgegeben werden kann. Weiter weisen die Kennwert-Berechnungsfunktion, die wenigstens eine Diagnosefunktion und die wenigstens eine Zustandsfunktion jeweils eine nicht verstellbare Funktionsbasis und wenigstens einen verstellbaren Einstell-Funktionsparameter auf, wobei diese Funktionen zudem derart ausgebildet sind, dass diese nur durch Einstellung der Einstell-Funktionsparameter an unterschiedliche an das Steuergerät anschließbare Sensortypen angepasst werden können. Weiter ist auch eine Einstelleinrichtung vorgesehen, mittels der die Parameterwerte der Einstell-Funktionsparameter in Abhängigkeit vom angeschlossenen Sensortyp eingestellt werden können. Erfindungsgemäß ist der Rußsensor dabei Bestandteil einer Sensoreinheit, wobei die Sensoreinheit neben dem Rußsensor eine signalübertragend mit dem Rußsensor verbundene Sensor-Steuereinrichtung aufweist, mittels der das analoge Messsignal des Rußsensors in ein digitales Signal umgewandelt wird.

Auf diese Weise kann das Steuergerät, an das eine Vielzahl unterschiedlicher Sensortypen angeschlossen werden kann, auf besonders einfache und effektive Weise an den an das Steuergerät anzuschließenden Rußsensor angepasst werden, da bei einem Anschluss eines neuen Sensortyps nun nicht mehr eine vollkommen neue Software auf das Steuergerät aufgespielt werden muss, um das Steuergerät an den neuen Sensortyp anzupassen. Anstelle dessen bleiben nun die Funktionsbasis der Kennwert-Berechnungsfunktion, die Funktionsbasis der wenigstens einen Diagnosefunktion und die Funktionsbasis der wenigstens einen Zustandsfunktion unverändert und es werden lediglich einzelne Parameterwerte der Einstell-Funktionsparameter neu eingestellt.

Die genannten Funktionen sind hier dabei als Rechenmodelle zu verstehen, mittels denen jeweils aus wenigstens einer Eingangsgröße wenigstens eine Ausgangsgröße ermittelt bzw. berechnet werden kann. Jedes dieser Rechenmodelle weist dabei wenigstens einen Einstell-Funktionsparameter auf, dessen Parameterwert verstellt werden kann, um das Rechenmodell an unterschiedliche Rußsensoren bzw. Rußsensortypen anzupassen. Die Funktionsbasis des jeweiligen Rechenmodells bleibt dabei stets unverändert. Die Funktionsbasis kann dabei beispielsweise die grundlegende Rechenstruktur des Rechenmodells umfassen. Konkret können die Rechenmodelle dabei Bestandteil einer auf das Steuergerät aufgespielten Software sein.

In einer bevorzugten erfindungsgemäßen Verfahrensführung sind die an das Steuergerät anschließbaren Rußsensoren bzw. diejenigen Rußsensoren, an die die Funktionen des Steuergeräts angepasst werden können, durch resisitive Rußsensoren gebildet. Mittels derartiger Rußsensoren kann der von dem Partikelfilter durchgelassene Rußmassenstrom einfach und zuverlässig gemessen werden. Alternativ oder zusätzlich zu den resistiven Rußsensoren können die an das Steuergerät anschließbaren Rußsensoren aber auch durch Rußsensoren gebildet sein, die beispielsweise nach einem Radiofrequenz-Messprinzip oder nach einem elektrostatischen Messprinzip arbeiten. Grundsätzlich ist festzuhalten, dass es vorteilhaft ist, wenn das Steuergerät an eine Vielzahl bzw. an eine hohe Anzahl von verfügbaren unterschiedlichen Rußsensoren angepasst werden kann.

Die an das Steuergerät anschließbaren resistiven Rußsensoren sind vorzugsweise derart ausgebildet, dass diese unmittelbar die Ruß-Leistungs-Kennwerte als Messsignal ausgeben.

Weiter bevorzugt geben die an das Steuergerät anschließbaren resisitiven Rußsensoren ein elektrisches Spannungssignal, ein elektrisches Stromstärkensignal oder ein elektrisches Widerstandssignal als Messsignal aus.

In einer bevorzugten konkreten Ausgestaltung weisen die genannten Funktionen insgesamt weniger als 160 Einstell-Funktionsparameter auf, wenn die an des Steuergerät anschließbaren Rußsensoren allein durch resisitive Rußsensoren gebildet sind. Dadurch kann das Steuergerät mit geringem Aufwand an eine Vielzahl unterschiedlicher resistiver Rußsensoren angepasst werden. Bevorzugt ist dabei vorgesehen, dass die Anzahl der Einstell-Funktionsparameter dabei in einem Bereich von 130 bis 155, bevorzugt in einem Bereich von 140 bis 150, besonders bevorzugt in einem Bereich von 141 bis 145, liegt.

Konkret kann der wenigstens eine Einstell-Funktionsparameter der Diagnosefunktion beispielsweise durch einen plausiblen Maximalwert und/oder durch einen plausiblen Minimalwert für die ermittelte Rußbeladung des angeschlossenen resistiven Rußsensors gebildet sein. Dabei kann die ermittelte Rußbeladung eines ersten angeschlossenen resistiven Rußsensors beispielsweise in einem Bereich von 100 mg bis 25000 mg Rußbeladung plausibel sein. Bei einem zweiten angeschlossenen resistiven Rußsensor kann die ermittelte Rußbeladung hingegen in einem Bereich von 0 mg bis 12500 mg Rußbeladung plausibel sein.

Der wenigstens eine Einstell-Funktionsparameter der Zustandsfunktion kann beispielsweise durch die Information gebildet sein, ob zur Regeneration des resistiven Rußsensors ein Steuerbefehl von dem Steuergerät an den Rußsensor ausgegeben werden muss oder nicht. So kann die Zustandsfunktion einerseits an resistive Rußsensoren angepasst werden, bei denen ein Regenerations-Steuerbefehl von dem Steuergerät an den Rußsensor ausgegeben werden muss, damit sich der Rußsensor regeneriert. Zudem kann die Zustandsfunktion dadurch auch an resisitive Rußsensoren angepasst werden, bei denen zur Regeneration des Rußsensors kein Regenerations-Steuerbefehl vor dem Steuergerät an dem Rußsensor ausgegeben werden muss.

Bevorzugt ist der wenigstens eine Einstell-Funktionsparameter der Diagnosefunktion durch den erlaubten Maximalwert und/oder durch den erlaubten Minimalwert für die Versorgungsspannung des Rußsensors gebildet. Über die Versorgungsspannung des Rußsensors kann die Funktion des Rußsensors auf einfache und effektive Weise überprüft werden. Weiter bevorzugt ist der wenigstens eine Einstell-Funktionsparameter der Diagnosefunktion durch einen plausiblen Maximalwert und/oder durch einen plausiblen Minimalwert für das Rußsensor-Messsignal gebildet. Mittels dieser Werte kann die Funktion des Rußsensors ebenfalls einfach und effektiv überprüft werden.

In einer bevorzugten konkreten Ausgestaltung weist die Kennwert-Berechnungsfunktion zur Ermittlung der Ruß-Leistungs-Kennwerte eine in dem Steuergerät gespeicherte Kennlinie auf, die den Zusammenhang zwischen dem Messsignal des Rußsensors bzw. einer aus dem Messsignal des Rußsensor abgeleiteten Größe und dem an dem Rußsensor vorbeiströmenden Rußmassenstrom beschreibt, wobei der Verlauf der Kennlinie durch mehrere in dem Steuergerät gespeicherte Stützstellen bzw. Wertepaare festgelegt ist: Der wenigstens eine Einstell-Funktionsparameter der Kennwert-Berechnungsfunktion ist dann durch eine einstellbare X-Position und/oder durch eine einstellbare Y-Position wenigstens einer Stützstelle der Kennlinie gebildet ist. Mittels einer derartigen Kennlinie kann der an dem Rußsensor vorbeiströmende Rußmassenstrom einfach und zuverlässig ermittelt werden. Zudem kann durch die Einstellung der X-Position bzw. der Y-Position wenigstens einer Stützstelle der Kennlinie die Kennlinie auf besonders einfache Weise an unterschiedliche Rußsensoren angepasst werden.

Konkret kann die X-Position der jeweiligen Stützstelle dabei durch einen Messsignal-Wert bzw. durch einen Wert der aus dem Messsignal abgeleiteten Größe und die Y-Position der jeweiligen Stützstelle durch einen Rußmassenstrom-Wert definiert sein. Bevorzugt ist es zudem, wenn die X-Position und die Y-Position von zumindest einem Teil der Stützstellen, insbesondere von jeder Stützstelle, Einstell-Funktionsparameter der Kennwert-Berechnungsfunktion ausbilden, um die Kennlinie auf einfache und flexible Weise an unterschiedliche Rußsensoren anpassen zu können. So können beispielsweise 10 Stützstellen für die Kennlinie bis zu 20 Einstell-Funktionsparameter ausbilden.

Weiter bevorzugt ist der wenigstens eine Einstell-Funktionsparameter der Kennwert-Berechnungsfunktion, der Diagnosefunktion und/oder der Zustandsfunktion durch die Information gebildet, ob die jeweilige Funktion bei dem angeschlossenen Rußsensor benötigt wird oder nicht. Dadurch kann die jeweilige Funktion beispielsweise deaktiviert werden, wenn sie für einen angeschlossenen Sensortyp nicht benötigt wird. Umgekehrt kann diese Funktion dann aktiviert werden, wenn sie für einen angeschlossenen Sensortyp benötigt wird.

In einer weiteren bevorzugten Ausgestaltung des erfindungsgemäßen Verfahrens ist der wenigstens eine Einstell-Funktionsparameter der Kennwert-Berechnungsfunktion durch die Auswertestrategie zur Auswertung des von dem Rußsensor ausgegebenen Messsignals gebildet. Über die Auswertestrategie kann die Kennwert-Berechnungsfunktion ebenfalls einfach und effektiv an unterschiedliche Rußsensoren angepasst werden.

Eine Auswertestrategie für einen resistiven Rußsensor kann beispielsweise dadurch gebildet sein, dass zunächst aus dem Messsignal des Rußsensors ein bei bestimmten Randbedingungen geltender Ausgangs-Rußmassenstrom ermittelt wird, anschließend der ermittelte Ausgangs-Rußmassenstrom mittels wenigstens eines Randbedingungs-Korrekturfaktors, mit dem die Randbedingungen während der Messung mit dem Rußsensor berücksichtigt werden, zu einem korrigierten Ist-Rußmassenstrom korrigiert wird und schließlich aus dem korrigierten Ist-Rußmassenstrom und der aufgewendeten Antriebsleistung der Brennkraftmaschine der Ruß-Leistungs-Kennwert ermittelt wird. Die Randbedingungen können dabei beispielsweise durch die Abgastemperatur, den Abgasmassenstrom, den Motorstatus, die Motorbetriebsart, den Rußbeladungsgrad, die Motordrehzahl, den Motorbetriebspunkt, den Sensorstatus, das Sensorsignal und/oder durch die Stellung eines Schalters zur Aktivierung der Signalauswertung gebildet sein.

Eine alternative Auswertestrategie für resistive Rußsensoren kann beispielsweise dadurch gebildet sein, dass zunächst aus dem Messsignal des Rußsensors ein Sensor-Beladungszeitraum zwischen einem Messungs-Startzeitpunkt und einem Grenzwert-Zeitpunkt, an dem der Messsignal-Wert einen definierten Grenzwert überschreitet, ermittelt wird, und dass aus diesem Sensor-Beladungszeitraum dann der bei definierten Randbedingungen geltende Ausgangs-Rußmassenstrom ermittelt wird.

Eine weitere Auswertestrategie für resistive Rußsensoren kann beispielsweise dadurch gebildet sein, dass zunächst aus dem Messsignal des Rußsensors eine an einer Rußsammeifläche des Rußsensors angesammelte, den elektrischen Widerstand zwischen den wenigstens zwei Elektroden des resistiven Rußsensors beeinflussende Rußmasse ermittelt wird, und dass aus dieser ermittelten Rußmasse dann der bei definierte Randbedingungen geltende Ausgangs-Rußmassenstrom ermittelt wird.

Vorzugsweise kann der anzuschließende Rußsensor mittels einer lösbaren CAN-Bus-Verbindung mit dem Steuergerät verbunden werden, um den Rußsensor einfach und effektiv an das Steuergerät anschließen zu können. Alternativ zu der CAN-Bus-Verbindung können der Rußsensor und das Steuergerät beispielsweise aber auch mittels einer LIN-Bus-Verbindung miteinander verbunden werden.

In einer bevorzugten konkreten Ausgestaltung ist die Einstelleinrichtung durch ein von dem Steuergerät separates bzw. externes, insbesondere mobiles, Gerät gebildet, das an das Steuergerät angeschlossen werden kann. Dadurch wird der Aufbau der Einstelleinrichtung und des Steuergerät deutlich vereinfacht. Eine separate Einstelleinrichtung kann zudem an mehrere Steuergeräte angeschlossen werden, um diese Steuergeräte an unterschiedliche Rußsensoren anzupassen. Bevorzugt ist dabei vorgesehen, dass die einzustellenden Parameterwerte für den angeschlossenen Rußsensor, insbesondere für mehrere und/oder für alle anschließbaren Rußsensoren, in einer Speichereinrichtung der Einstelleinrichtung gespeichert sind, um die Flexibilität bzw. den Einsatzbereich der Einstelleinrichtung zu erhöhen.

Alternativ zu der separaten Einstelleinrichtung kann aber auch vorgesehen sein, dass die Einstelleinrichtung Bestandteil des Steuergeräts ist, um die Flexibilität des Steuergeräts zu erhöhen. Bevorzugt ist dabei vorgesehen, dass die einzustellenden Parameterwerte für den angeschlossenen Rußsensor, insbesondere für mehrere und/oder für alle anschließbaren Rußsensoren, in einer Speichereinrichtung des Steuergeräts gespeichert sind.

In einer besonders bevorzugten Ausgestaltung weist das Steuergerät eine Sensor-Erkennungseinrichtung auf, mittels der der an das Steuergerät angeschlossene Sensortyp bzw. Rußsensor selbsttätig bzw. automatisch erkannt bzw. erfasst werden kann. Die für den erfassten Sensortyp einzustellenden Parameterwerte werden dann selbsttätig bzw. automatisch mittels der steuergerätseitigen Einstelleinrichtung eingestellt. Durch diese automatische Sensorerkennung und automatische Einstellung der Parameterwerte kann das Steuergerät auf besonders komfortable und zuverlässige Weise an den angeschlossenen Sensortyp angepasst werden.

Zur Lösung der bereits genannten Aufgabe wird ferner ein Steuergerät zur Überprüfung der Funktion eines Partikelfilters, insbesondere eines Dieselpartikelfilters, eines mit einer Brennkraftmaschine verbundenen Abgasstrangs vorgeschlagen, mit einer Anschlusseinrichtung, mittels der ein Rußsensor lösbar und signalübertragend an das Steuergerät angeschlossen werden kann, wobei der Rußsensor Bestandteil einer Sensoreinheit ist, wobei die Sensoreinheit neben dem Rußsensor eine signalübertragend mit dem Rußsensor verbundene Sensor-Steuereinrichtung aufweist, mittels der das analoge Messsignal des Rußsensors in ein digitales Signal umgewandelt wird, und wobei mittels des Rußsensors der von dem Partikelfilter durchgelassene und somit an dem Rußsensor vorbeiströmende Rußmassenstrom ermittelt und/oder gemessen werden kann. Das Steuergerät weist eine Signal-Verarbeitungseinrichtung mit einer Kennwert-Berechnungsfunktion auf, wobei mittels der Kennwert-Berechnungsfunktion aus dem ermittelten Rußmassenstrom und der, insbesondere mit dem Steuergerät ermittelten, eingesetzten Antriebsleistung der Brennkraftmaschine Ruß-Leistungs-Kennwerte ermittelt werden können, bei denen der von dem Partikelfilter durchgelassene Rußmassenstrom in Relation zur Brennkraftmaschinen-Antriebsleistung gesetzt ist, wobei mittels der Signal-Verarbeitungseinrichtung zudem ermittelt werden kann, ob die ermittelten Ruß-Leistungs-Kennwerte einen definierten Ruß-Leistungs-Grenzwert überschreiten. Zudem weist die Signal-Verarbeitungseinrichtung wenigstens eine Diagnosefunktion auf, mittels der die Funktion des Rußsensors überprüft werden kann, wobei die Signal-Verarbeitungseinrichtung weiter auch wenigstens eine Zustandsfunktion aufweist, mittels der der aktuelle Zustand des Rußsensors erfasst und wenigstens ein Steuerbefehl zur gezielten Ansteuerung des Rußsensors und somit zur Änderung des Zustands des Rußsensors ausgegeben werden kann. Weiter weisen die Kennwert-Berechnungsfunktion, die wenigstens eine Diagnosefunktion und die wenigstens eine Zustandsfunktion jeweils eine nicht verstellbare Funktionsbasis und jeweils wenigstens einen verstellbaren Einstell-Funktionsparameter auf, wobei diese Funktionen zudem derart ausgebildet sind, dass diese nur durch Einstellung der Einstell-Funktionsparameter an unterschiedliche an das Steuergerät anschließbare Sensortypen angepasst werden können. Zudem weist das Steuergerät eine Einstelleinrichtung auf, mittels der die Parameterwerte der Einstell-Funktionsparameter in Abhängigkeit vom angeschlossenen Sensortyp eingestellt werden können. Alternativ zu einer derartigen Einstelleinrichtung ist vorgesehen, dass eine von dem Steuergerät separate Einstelleinrichtung an das Steuergerät anschließbar ist, mittels der die Parameterwerte der Einstell-Funktionsparameter in Abhängigkeit vom angeschlossenen Sensortyp einstellbar sind.

Zudem wird auch eine Vorrichtung zur Überprüfung der Funktion eines Partikelfilters, insbesondere eines Dieselpartikelfilters, eines mit einer Brennkraftmaschine verbundenen Abgasstrangs beansprucht, mit einer Verbindungseinrichtung, mittels der ein Rußsensor, der Bestandteil einer Sensoreinheit ist, lösbar und signalübertragend mit einem Steuergerät verbunden werden kann, wobei die Sensoreinheit neben dem Rußsensor eine signalübertragend mit dem Rußsensor verbundene Sensor-Steuereinrichtung aufweist, mittels der das analoge Messsignal des Rußsensors in ein digitales Signal umgewandelt wird, wobei der Rußsensor, in Abgas-Strömungsrichtung gesehen, stromab des Partikelfilters angeordnet ist, dergestalt, dass mittels des Rußsensors der von dem Partikelfilter durchgelassene und somit an dem Rußsensor vorbeiströmende Rußmassenstrom gemessen und/oder ermittelt werden kann. Das Steuergerät weist eine Signal-Verarbeitungseinrichtung mit einer Kennwert-Berechnungsfunktion auf, wobei mittels der Kennwert-Berechnungsfunktion aus dem ermittelten Rußmassenstrom und der, insbesondere mit dem Steuergerät berechneten, eingesetzten Antriebsleistung der Brennkraftmaschine Ruß-Leistungs-Kennwerte ermittelt werden können, bei denen der von dem Partikelfilter durchgelassene Rußmassenstrom in Relation zur Brennkraftmaschinen-Antriebsleistung gesetzt ist, wobei mittels der Signal-Verarbeitungseinrichtung zudem ermittelt werden kann, ob die ermittelten Ruß-Leistungs-Kennwerte einen definierten Ruß-Leistungs-Grenzwert überschreiten. Zudem weist die Signal-Verarbeitungseinrichtung wenigstens eine Diagnosefunktion auf, mittels der die Funktion des Rußsensors überprüft werden kann, wobei die Signal-Verarbeitungseinrichtung weiter auch wenigstens eine Zustandsfunktion aufweist, mittels der der aktuelle Zustand des Rußsensors erfasst und wenigstens ein Steuerbefehl zur gezielten Ansteuerung des Rußsensors und somit zur Änderung des Zustands des Rußsensors ausgegeben werden kann. Weiter weisen die Kennwert-Berechnungsfunktion, die wenigstens eine Diagnosefunktion und die wenigstens eine Zustandsfunktion jeweils eine nicht verstellbare Funktionsbasis und jeweils wenigstens einen verstellbaren Einstell-Funktionsparameter auf, wobei diese Funktionen zudem derart ausgebildet sind, dass diese nur durch Einstellung der Einstell-Funktionsparameter an unterschiedliche an das Steuergerät anschließbare Sensortypen angepasst werden können. Zudem weist die Vorrichtung eine Einstelleinrichtung auf, mittels der die Parameterwerte der Einstell-Funktionsparameter in Abhängigkeit vom angeschlossenen Sensortyp eingestellt werden können.

Des Weiteren wird auch ein Fahrzeug, insbesondere ein Nutzfahrzeug, mit der erfindungsgemäßen Vorrichtung beansprucht.

Die sich durch das erfindungsgemäße Steuergerät, die erfindungsgemäße Vorrichtung und das erfindungsgemäße Fahrzeug ergebenden Vorteile sind identisch mit den bereits gewürdigten Vorteilen des erfindungsgemäßen Verfahrens, so dass diese an dieser Stelle nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: eine grob schematische Darstellung, aus der der Aufbau einer erfindungsgemäßen Vorrichtung hervorgeht;
- Figur 2: eine schematische Darstellung, aus der der Aufbau der Vorrichtung hervorgeht;
- Figur 3: einen Teil eines resistiven Rußsenors der Vorrichtung;
- Figur 4: ein Diagramm, anhand dem die Funktionsweise eines resistiven Rußsensors erläutert wird;
- Figur 5 und 6: Diagramme, in denen für unterschiedliche Sensortypen geltende Kennlinien eingetragen sind;
- Figur 7 und 8: Darstellungen, anhand denen eine Anpassung eines Steuergeräts der Vorrichtung an unterschiedliche Sensortypen erläutert wird;
- Figur 9: in einer Darstellung gemäß Fig. 2 eine zweite Ausführungsform einer erfindungsgemäßen Vorrichtung.

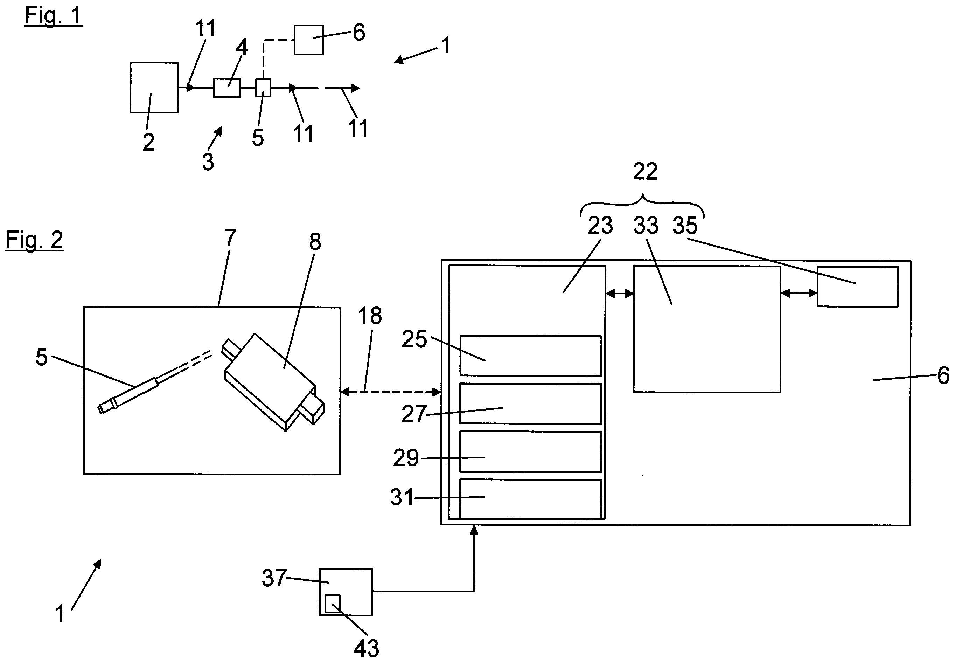

In Figur 1 ist eine erfindungsgemäße Vorrichtung 1 in einer schematischen Darstellung gezeigt. Die Vorrichtung 1 weist eine Brennkraftmaschine 2 und einen an die Brennkraftmaschine 2 angeschlossenen Abgasstrang 3 auf. Mittels des Abgasstrangs 3 wird dabei ein von der Brennkraftmaschine 2 emittiertes Abgas 11 in die freie Umgebung geleitet. Der Abgasstrang 3 weist hier dabei einen Partikelfilter 4 und einen, in Abgas-Strömungsrichtung gesehen, stromab des Partikelfilters 4 angeordneten Rußsensor 5 auf. Mittels des Partikelfilters 4 werden die in dem Abgas 11 der Brennkraftmaschine 2 enthaltenen Rußpartikel aus dem Abgas 11 herausgefiltert. Mittels des Rußsensors 5 kann ein von dem Partikelfilter 4 durchgelassener und somit an dem Rußsensor 5 vorbeiströmender Rußmassenstrom gemessen bzw. ermittelt werden. Auf diese Weise kann mittels des Rußsensors 5 die Funktion des Partikelfilters 4 überwacht werden. Des Weiteren arbeitet der Rußsensor 5 hier beispielhaft nach einem resistiven Messprinzip. Natürlich wäre es aber auch möglich, dass der Rußsensor 5 nach einem anderem Messprinzip, beispielsweise nach einem Radiofrequenz-Messprinzip oder nach einem elektrostatischen Messprinzip, arbeitet. Gemäß Fig. 1 ist der Rußsensor 5 zudem signaltechnisch mit einem Steuergerät 6 der Vorrichtung 1 verbunden, mittels dem das Messsignal des Rußsensors 5 verarbeitet wird.

Wie weiter aus Fig. 2 hervorgeht ist, ist der Rußsensor 5 hier Bestandteil einer Sensoreinheit 7 der Vorrichtung 1. Neben dem Rußsensor 5 weist die Sensoreinheit 7 eine signalübertragend mit dem Rußsensor 7 verbundene Sensor-Steuereinrichtung 8 auf. Mittels der Sensor-Steuereinrichtung 8 wird das analoge Messsignal des Rußsensors 7 in ein digitales Signal umgewandelt. Zudem können mittels der Sensor-Steuereinrichtung 8 mehrere Sensorfunktionen, beispielsweise eine Heizfunktion des Rußsensors 7, gesteuert werden.

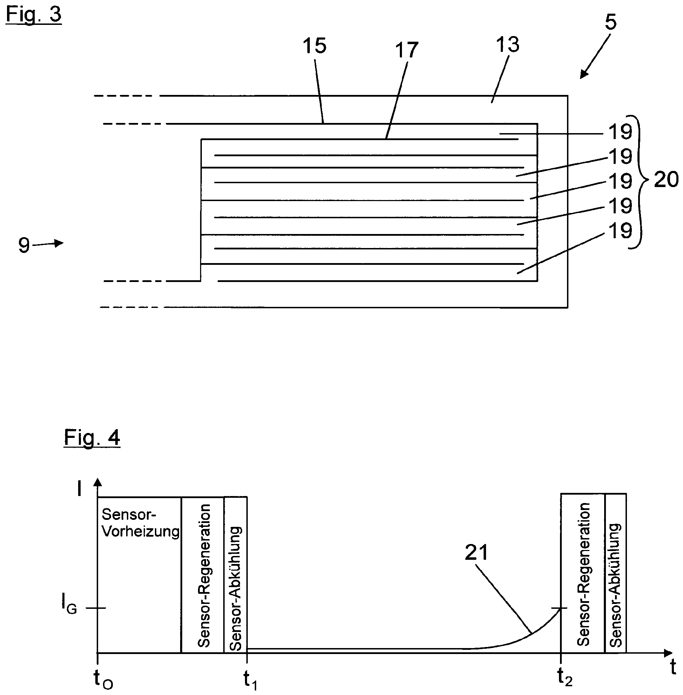

Die Funktionsweise des Rußsensors 5 wird im Folgenden anhand der Figuren 3 und 4 nochmals näher erläutert:
In Figur 3 ist beispielhaft ein Messelement 9 des resistiven Rußsensors 5 teilweise gezeigt. An diesem Messelement 9 weist der Rußsensor 5 ein Substrat bzw. eine Trägerplatte 13 auf, auf die zwei voneinander beabstandete Elektroden 15, 17 aufgebracht sind. Zwischen den beiden Elektroden 15, 17 befindliche Wandbereiche 19 der Trägerplatte 13 bilden eine Rußsammelwand bzw. eine Rußsammelfläche 20 aus, an der sich die elektrisch leitfähigen Rußpartikel anlagern, wenn diese an dem Messelement 9 des Rußsensors 5 vorbeiströmen. In einem Ausgangszustand des Rußsensors 5, in dem keine bzw. kaum Rußpartikel an der Rußsammelfläche 20 angelagert sind, kann dabei kein elektrischer Strom zwischen den Elektroden 15, 17 fließen. Sofern sich an der Rußsammelfläche 20 jedoch eine ausreichende Menge Partikeln angesammelt hat, kann zwischen den Elektroden 15, 17 elektrischer Strom fließen. Der elektrische Widerstand zwischen den Elektroden 15, 17 nimmt dann mit noch weiter steigender Rußbeladung der Rußsammelfläche 20 ab, wodurch der zwischen den Elektroden 15, 17 fließende elektrische Strom ansteigt.

Dies geht auch aus dem in Figur 4 gezeigten Diagramm hervor, in das eine Kurve 21 eingetragen, die den Verlauf einer Stromstärke I als Messsignal des Rußsensors 5 in Abhängigkeit von der Zeit t zeigt. An einem Zeitpunkt t₁ befindet sich der Rußsensor 5 dabei in dem bereits genannten Ausgangszustand, bei dem sich noch keine bzw. kaum Rußpartikel an der Rußsammelfläche 20 angelagert haben. Zu den Zeitpunkt t₁ beginnt dann ein Sensor-Beladungszeitraum, in dem sich Rußpartikel an der Rußsammelfläche 20 des Rußsensors 5 anlagern können. Dabei fließt zunächst noch kein Strom zwischen den Elektroden 15, 17 des Rußsensors 5. Ab einer bestimmten Rußbeladung sind die Elektroden 15, 17 dann über die Rußpartikel elektrisch miteinander verbunden, so dass zwischen den Elektroden 15, 17 Strom fließen kann. Mit weiter steigender Rußbeladung nimmt der zwischen den Elektroden 15, 17 fließende Strom und somit auch die Stromstärke I zu. Erreicht die Stromstärke I dann einen definierten Stromstärke-Grenzwert I_{G} an einem Zeitpunkt t₂, ist der Sensor-Beladungszeitraum beendet. Nach dem Sensor-Beladungszeitraum wird dann eine Sensor-Regeneration durchgeführt, bei dem die Trägerplatte 13 des Rußsensors 5 derart mittels einer Heizeinrichtung des Rußsensors 5 beheizt wird, dass die an der Rußsammelfläche 20 des Rußsensors 5 angesammelten Rußpartikel verbrennen. Nach der Sensor-Regeneration wird die Trägerplatte 13 des Rußsensors 5 dann noch für einen definierten Zeitraum abgekühlt, so dass wieder der Ausgangszustand des Rußsensors 5 hergestellt wird. Danach beginnt ein neuer Sensor-Beladungszeitraum.

Um diesen Ausgangszustand bei einem Start der Brennkraftmaschine 2 zu erreichen, wird hier beispielhaft nach dem Start der Brennkraftmaschine 2 zu einem Zeitpunkt t₀ zunächst die Trägerplatte 13 des Rußsensors 5 mittels der Heizeinrichtung des Rußsensors 5 vorgeheizt, um an der Trägerplatte 13 angesammelte Feuchtigkeit zu kondensieren. Ab einer Taupunkt-Freigabe, bei der die an der Trägerplatte 13 angesammelte Feuchtigkeit einen definierten Feuchtigkeits-Grenzwert unterschreitet, wird dann die Sensor-Regeneration durchgeführt und schließlich die Trägerplatte 13 des Rußsensors 5 wieder für einen definierten Zeitraum abgekühlt.

Des Weiteren sind die Sensoreinheit 7 bzw. die Sensor-Steuereinrichtung 8 der Sensoreinheit 7 und das Steuergerät 6 hier beispielhaft mittels einer CAN-Bus-Verbindung 18 lösbar miteinander verbunden. Über diese CAN-Bus-Verbindung werden zahlreiche Daten zwischen der Sensor-Steuereinrichtung 8 und dem Steuergerät 6 ausgetauscht. Beispielsweise werden hier das mittels der Sensor-Steuereinrichtung 8 in ein digitales Signal umgewandelte Messsignal des Rußsensors 5, die mittels eines Temperatursensors des Rußsensors 5 gemessene Rußsensor-Temperatur, die Versorgungsspannung des Rußsensors 5, eine Betriebszeit des Rußsensors 5 und der aktuelle Zustand des Rußsensors 5 von der Sensor-Steuereinrichtung 8 an das Steuergerät 6 übermittelt werden. Der aktuelle Zustand des Rußsensors 5 ist hier beispielsweise dadurch gekennzeichnet, ob sich der Rußsensor 5 gerade in der Regenerationsphase, in der Kühlphase, in der Rußbeladungsphase, in einer Messphase oder in einer Ruhephase befindet. Von dem Steuergerät 6 können beispielsweise Daten bezüglich der Taupunkt-Freigabe, ein Steuerbefehl zur Durchführung einer Regeneration des Rußsensors 5 und ein Steuerbefehl zur Durchführung einer Rußmessung mit dem Rußsensor 5 an die Sensor-Steuereinrichtung 8 übermittelt werden.

Wie weiter aus Figur 2 hervorgeht, weist das Steuergerät 5 hier eine Signal-Verarbeitungseinrichtung 22 mit einer Funktionseinheit 23 auf. Die Funktionseinheit 23 ist hier beispielhaft durch einen Hardware-nahen Softwaretreiber gebildet. Konkret weist die Funktionseinheit 23 hier eine Kennwert-Berechnungsfunktion 25, eine elektrische Diagnosefunktion 27, eine physikalische Diagnosefunktion 29 und eine Zustandsfunktion 31 auf. Mittels der Kennwert-Berechnungsfunktion 25 wird dabei aus dem an das Steuergerät 6 übermittelten Messsignal des Rußsensors 5 der an dem Rußsensor 5 vorbeiströmende Rußmassenstrom ermittelt. Zudem werden mittels der Kennwert-Berechnungsfunktion 25 aus dem ermittelten Rußmassenstrom und der mit dem Steuergerät 6 ermittelten bzw. berechneten, aufgewendeten Antriebsleistung der Brennkraftmaschine 2 Ruß-Leistungs-Kennwerte ermittelt, bei denen der ermittelte Rußmassenstrom in Relation zu der Antriebsleistung der Brennkraftmaschine 2 gesetzt ist. Die Ruß-Leistungs-Kennwerte weisen hier beispielhaft die Einheit [mg/kWh] auf. Die ermittelten Ruß-Leistungs-Kennwerte werden dann an eine Partikelfilter-Überwachungsfunktion 33 der Signal-Verarbeitungseinrichtung 22 übermittelt, mittels der anhand der ermittelten Ruß-Leistungs-Kennwerte ermittelt wird, ob der Partikelfilter defekt ist. Dabei wird unter anderem überprüft, ob die ermittelten Ruß-Leistungs-Kennwerte einen definierten Ruß-Leistungs-Grenzwert überschreiten. Bei der Euro-6-Abgasnorm beträgt der Ruß-Leistungs-Grenzwert beispielsweise 25 mg/kWh. Das Ergebnis dieser Funktionsprüfung wird dann in einen Fehlerspeicher 35 der Signal-Verarbeitungseinrichtung 22 gespeichert.

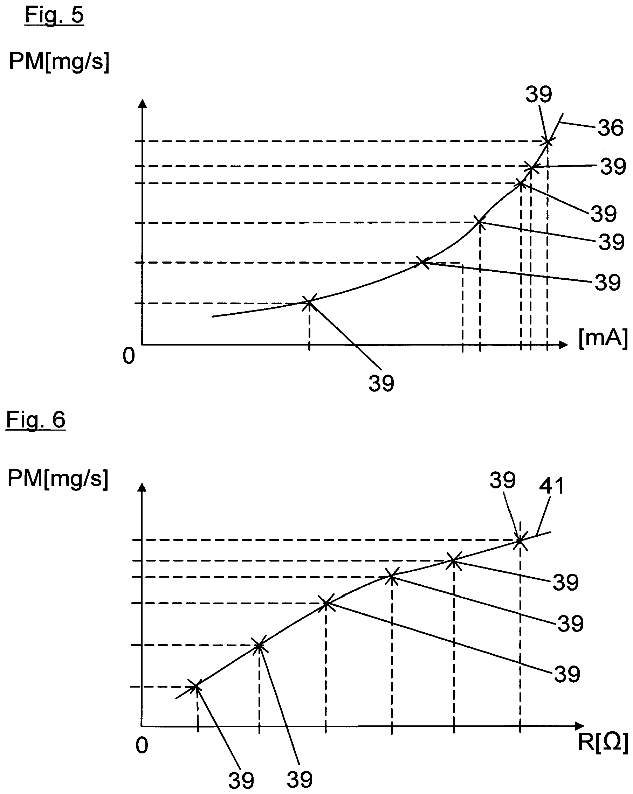

Zur Ermittlung der Ruß-Leistungs-Kennwerte ist hier beispielhaft eine in Fig. 5 gezeigte Kennlinie 36 in der Kennwert-Berechnungsfunktion 25 hinterlegt bzw. gespeichert. Diese Kennlinie 36 beschreibt den Zusammenhang zwischen dem Messsignal bzw. Nutzsignal des Rußsensors 5, das hier beispielhaft durch die gemessene Stromstärke I gebildet ist, und dem an dem Rußsensor 5 vorbeiströmenden Rußmassenstrom. Der Verlauf dieser Kennlinie 36 ist durch mehrere, hier beispielhaft sechs, in der Kennwert-Berechnungsfunktion 25 gespeicherte Stützstellen 39 festgelegt.

Zum Vergleich ist in Fig. 6 eine weitere Kennlinie 41 gezeigt, mittels der die Ruß-Leistungs-Kennwerte ermittelt werden können. Diese Kennlinie 41 beschreibt den Zusammenhang zwischen dem Messsignal eines anderen resistiven Rußsensors und dem an dem Rußsensor vorbeiströmenden Rußmassenstrom. Bei diesem anderem Rußsensor ist das Messsignal nicht durch die gemessene Stromstärke I, sondern durch den gemessenen elektrischen Widerstand R zwischen den Elektroden des Rußsensors gebildet. Der Verlauf dieser Kennlinie 41 wird ebenfalls durch die Stützstellen 39 festgelegt, wobei den Stützstellen 39 nun andere Werte zugeordnet sind.

Des Weiteren kann mittels der elektrischen Diagnosefunktion 27 der Funktionseinheit 23 die Funktion des Rußsensors 7 überprüft werden. Für diese Funktionsprüfung wird hier beispielhaft die von der Sensor-Steuereinrichtung 11 an das Steuergerät 5 übermittelte Versorgungsspannung des Rußsensors 7 überwacht. Der zulässige Maximalwert und der zulässige Minimalwert für die Versorgungsspannung des Rußsensors 5 sind hier dabei in der elektrischen Diagnosefunktion 27 hinterlegt bzw. gespeichert.

Mittels der physikalischen Diagnosefunktion 29 wird ebenfalls die Funktion des Rußsensors 5 überprüft. Dabei wird hier beispielhaft überprüft, ob sich das Messsignal des Rußsensors 5 in einem von einem definierten Maximalwert und einem definierten Minimalwert begrenzten plausiblen Signalbereich befindet. Der plausible Maximalwert und der plausible Minimalwert sind dabei in der physikalischen Diagnosefunktion 29 hinterlegt bzw. gespeichert.

Mittels der Zustandsfunktion 31 wird hier einerseits der aktuelle Zustand des Rußsensors 5 erfasst. Dabei wird anhand der von der Sensoreinheit 7 an das Steuergerät 6 übertragenen Daten beispielsweise erfasst, in welcher Phase sich der Rußsensor 5 aktuell befindet. In Abhängigkeit von dem erfassten Zustand des Rußsensors 5 kann dann mittels der Zustandsfunktion 31 zudem auch wenigstens ein Steuerbefehl zur gezielten Ansteuerung des Rußsensor 5 ermittelt und ausgegeben werden.

Des Weiteren weist jede Funktion 25, 27, 29, 31 der Funktionseinheit 23 eine nicht verstellbare Funktionsbasis und wenigstens einen verstellbaren Einstell-Funktionsparameter auf. Über diese verstellbaren Einstell-Funktionsparameter können die Funktion 25, 27, 29, 31 an unterschiedliche, an das Steuergerät 5 anzuschließende Rußsensoren angepasst werden. Zur Einstellung der Einstell-Funktionsparameter weist die Vorrichtung 1 eine signaltechnisch mit dem Steuergerät verbundene Einstelleinrichtung 37 auf, mittels der die Parameterwerte der Einstell-Funktionsparameter in Abhängigkeit vom verwendeten Sensortyp eingestellt werden können. Die Funktionen der Steuereinheit 23 sind dabei derart ausgebildet, dass diese nur durch Einstellung dieser Parameterwerte an den an das Steuergerät 5 anzuschließenden Sensortyp angepasst werden können.

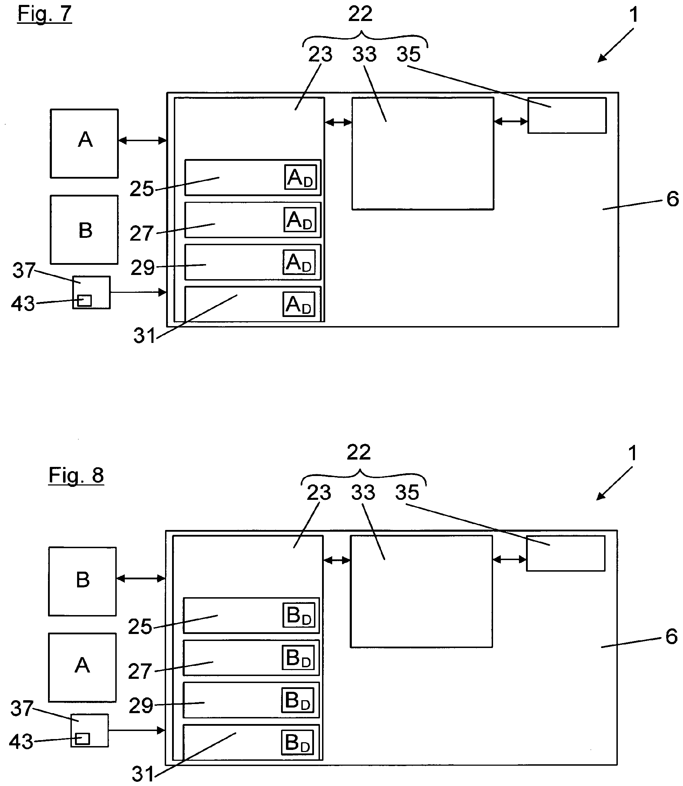

Die Einstell-Funktionsparameter sind hier unter anderem durch den Maximalwert für die erlaubte Versorgungsspannung des Rußsensors 5, durch den Minimalwert für die erlaubte Versorgungsspannung des Rußsensors 5, durch den plausiblen Maximalwert für das Rußsensor-Messsignal, durch den plausiblen Minimalwert für das Rußsensor-Messsignal, durch die Auswertestrategie zur Auswertung von dem Rußsensor 5 ausgegebenen Messsignals und durch die Information gebildet, ob zur Regeneration des resistiven Rußsensors 5 ein Steuerbefehl von den Steuergerät 6 an den Rußsensor 5 ausgegeben werden muss oder nicht. Zudem sind die Einstell-Funktionsparameter hier auch durch die X-Positionen und Y-Positionen der Stützstellen 39 (Figur 7) gebildet, die den Verlauf der Kennlinie 36 der Kennwert-Berechnungsfunktion 25 festlegen.

Des Weiteren ist die Einstelleinrichtung 37 hier beispielhaft durch ein von dem Steuergerät 6 separates bzw. externes Gerät gebildet, das lösbar mit dem Steuergerät 6 verbunden werden kann. Zudem weist die von dem Steuergerät separate Einstelleinrichtung 37 hier beispielhaft auch eine Speichereinrichtung 43 auf, in der die einzustellenden Parameterwerte für eine Vielzahl von an das Steuergerät 6 anschließbaren Rußsensoren gespeichert sind.

Im Folgenden wird die Anpassung des Steuergeräts 5 an einen anderen Sensortyp anhand der Figuren 7 und 8 nochmals näher erläutert:
In dem in Fig. 7 gezeigten Zustand der Vorrichtung 1 ist ein Rußsensor A an das Steuergerät 6 angeschlossen und das Steuergerät 6 an den Rußsensor A angepasst, so dass die Parameterwerte der verstellbaren Einstell-Funktionsparameter der Funktionen 25, 27, 29, 31 auf den Rußsensor A eingestellt sind. Die eingestellten Parameterwerte sind als Datensätze A_{D} in den Funktionen 25, 27, 29, 31 gespeichert. Nun soll der Rußsensor A durch einen Rußsensor B ersetzt werden, wobei der Rußsensor B ein anderer Sensortyp wie der Rußsensor A ist. Hierzu wird einerseits die Verbindung zwischen dem Sensor A und dem Steuergerät 6 gelöst und der ebenso wie der Sensor A eine CAN-Schnittstelle aufweisende Sensor B an das Steuergerät 6 angeschlossen. Zudem werden mittels der datenübertragend mit dem Steuergerät 6 verbundenen Einstelleinrichtung 37 die in den Funktionen 25, 27, 29, 31 gespeicherten Datensätze A_{D} durch Datensätze B_{D} ersetzt, die die Parameterwerte der Einstell-Funktionsparameter für den Sensor B aufweisen. Die Datensätze B_{D} sind dabei in der Speichereinrichtung 43 der Einstelleinrichtung 37 gespeichert und werden mittels der Einstelleinrichtung 37 auf das Steuergerät 5 aufgespielt, so dass die Datensätze B_{D} in den Funktionen 25, 27, 29, 31 des Steuergeräts 6 gespeichert werden. In dem in Fig. 8 gezeigten Zustand ist dann der Rußsensor B an das Steuergerät 6 angeschlossen und das Steuergerät 6 an den Rußsensor B angepasst.

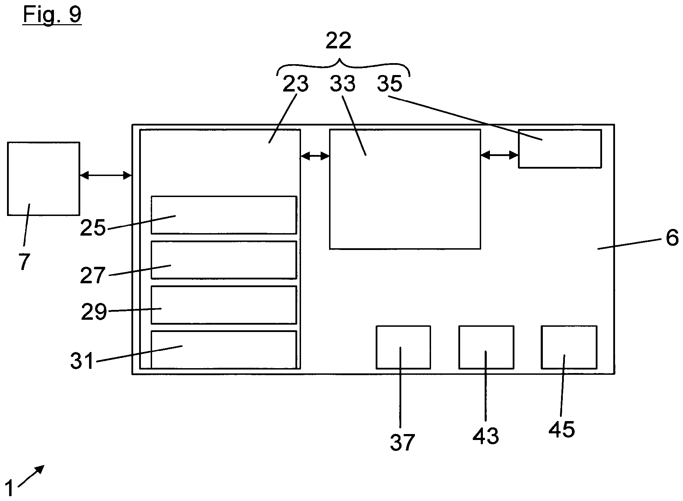

In der Figur 9 ist eine zweite Ausführungsform der erfindungsgemäßen Vorrichtung 1 gezeigt. Im Vergleich zu der in den Figuren 1 bis 8 gezeigten ersten Ausführungsform der Vorrichtung 1 ist die Einstelleinrichtung 37 hier nicht durch ein von dem Steuergerät 6 separates Gerät gebildet. Anstelle dessen ist die Einstelleinrichtung 37 hier Bestandteil des Steuergeräts 6. Zudem ist die Speichereinrichtung 43 hier ebenfalls Bestandteil des Steuergeräts 6.

Des Weiteren weist das Steuergerät 6 hier auch eine Sensor-Erkennungseinrichtung 45, mittels der der an das Steuergerät 6 angeschlossene Sensortyp erkannt bzw. erfasst werden kann. Zudem werden die einzustellenden Parameterwerte des an das Steuergerät 6 angeschlossenen Rußsensors hier in Abhängigkeit vom erfassten Sensortyp selbsttätig bzw. automatisch mittels der Einstelleinrichtung 37 eingestellt. Zur Anpassung des Steuergeräts 6 an einen neuen Rußsensor muss hier daher lediglich der neue Rußsensor an das Steuergerät 6 angeschlossen werden.

### Bezugszeichenliste

- 1: Vorrichtung
- 2: Brennkraftmaschine
- 3: Abgasstrang
- 4: Partikelfilter
- 5: Rußsensor
- 6: Steuergerät
- 7: Sensoreinheit
- 8: Sensor-Steuereinrichtung
- 9: Messelement
- 13: Trägerplatte
- 15: Elektrode
- 17: Elektrode
- 18: CAN-Bus-Verbindung
- 19: Wandbereich
- 20: Rußsammelfläche
- 21: Kurve
- 22: Signal-Verarbeitungseinrichtung
- 23: Funktionseinheit
- 25: Kennwert-Berechnungsfunktion
- 27: elektrische Diagnosefunktion
- 29: physikalische Diagnosefunktion
- 31: Zustandsfunktion
- 33: Partikelfilter-Überwachungsfunktion
- 35: Fehlerspeicher
- 36: Kennlinie
- 37: Einstelleinrichtung
- 39: Stützstelle
- 41: Kennlinie
- 43: Speichereinrichtung
- 45: Sensor-Erkennungseinrichtung
- A: Rußsensor A
- A_{D}: Datensatz Rußsensor A
- B: Rußsensor B
- B_{D}: Datensatz Rußsensor B

## Patentansprüche

1. Verfahren zur Anpassung eines Steuergeräts an einen an das Steuergerät anschließbaren Rußsensor, der zur Überwachung der Funktion eines Partikelfilters, insbesondere eines Dieselpartikelfilters, eines mit einer Brennkraftmaschine verbundenen Abgasstrangs dient,
wobei mittels des anschließbaren Rußsensors (5, A, B) der von dem Partikelfilter (4) durchgelassene und somit an dem Rußsensor (5, A, B) vorbeiströmende Rußmassenstrom messbar und/oder ermittelbar ist,
wobei das Steuergerät (6) eine Signal-Verarbeitungseinrichtung (22) mit einer Kennwert-Berechnungsfunktion (25) aufweist, wobei mittels der Kennwert-Berechnungsfunktion (25) aus dem ermittelten Rußmassenstrom und der, insbesondere mit dem Steuergerät (6) ermittelten, eingesetzten Antriebsleistung der Brennkraftmaschine (2) Ruß-Leistungs-Kennwerte ermittelbar sind, bei denen der von dem Partikelfilter durchgelassene Rußmassenstrom in Relation zur Brennkraftmaschinen-Antriebsleistung gesetzt ist, wobei mittels der Signal-Verarbeitungseinrichtung (22) zudem ermittelbar ist, ob die ermittelten Ruß-Leistungs-Kennwerte einen definierten Ruß-Leistungs-Grenzwert überschreiten,
wobei die Signal-Verarbeitungseinrichtung (22) zudem wenigstens eine Diagnosefunktion (27, 29) aufweist, mittels der die Funktion des Rußsensors (5) überprüfbar ist, wobei die Signal-Verarbeitungseinrichtung (22) eine Zustandsfunktion (31) aufweist, mittels der der aktuelle Zustand des Rußsensors (5, A, B) erfassbar und wenigstens ein Steuerbefehl zur gezielten Ansteuerung des Rußsensors (5, A, B) ermittelbar und/oder ausgebbar ist,
wobei die Kennwert-Berechnungsfunktion (25), die wenigstens eine Diagnosefunktion (27, 29) und die Zustandsfunktion (31) jeweils eine nicht verstellbare Funktionsbasis und wenigstens einen verstellbaren Einstell-Funktionsparameter aufweisen, wobei diese Funktionen derart ausgebildet sind, dass diese nur durch Einstellung der Einstell-Funktionsparameter an unterschiedliche an das Steuergerät (6) anschließbare Sensortypen (5) angepasst werden können,
wobei eine Einstelleinrichtung (37) vorgesehen ist, mittels der die Parameterwerte der Einstell-Funktionsparameter in Abhängigkeit vom angeschlossenen Sensortyp (5, A, B) eingestellt werden, und
wobei der Rußsensor (5, A, B) Bestandteil einer Sensoreinheit (7) ist, wobei die Sensoreinheit (7) neben dem Rußsensor (5, A, B) eine signalübertragend mit dem Rußsensor (7) verbundene Sensor-Steuereinrichtung (8) aufweist, mittels der das analoge Messsignal des Rußsensors (5, A, B) in ein digitales Signal umgewandelt wird.

2. Verfahren nach Anspruch 1, **dadurch gekennzeichnet, dass** die an das Steuergerät (6) anschließbaren Rußsensoren (5, A, B) durch resistive Rußsensoren gebildet sind, wobei bevorzugt vorgesehen ist, dass die an das Steuergerät (6) anschließbaren resistiven Rußsensoren (5, A, B) ein elektrisches Spannungssignal, ein elektrisches Stromstärkesignal oder ein elektrisches Widerstandssignal als Messsignal ausgeben.

3. Verfahren nach Anspruch 2, **dadurch gekennzeichnet, dass** die Funktionen insgesamt weniger als 160 Einstell-Funktionsparameter aufweisen, wobei bevorzugt vorgesehen ist, dass die Anzahl der Einstell-Funktionsparameter insgesamt in einem Bereich von 130 bis 155, bevorzugt in einem Bereich von 140 bis 150, besonders bevorzugt in einem Bereich von 141 bis 145, liegt.

4. Verfahren nach Anspruch 2 oder 3, **dadurch gekennzeichnet, dass** der wenigstens eine Einstell-Funktionsparameter der Diagnosefunktion (27, 29) durch einen plausiblen Maximalwert und/oder durch einen plausiblen Minimalwert für die ermittelte Rußbeladung des resisitiven Rußsensors (5, A, B) gebildet ist.

5. Verfahren nach einem der Ansprüche 2 bis 4, **dadurch gekennzeichnet, dass** der wenigstens eine Einstell-Funktionsparameter der Zustandsfunktion (31) durch die Information gebildet ist, ob zur Regeneration des resistiven Rußsensors (5, A, B) ein Steuerbefehl von dem Steuergerät (6) an den Rußsensor (5, A, B) ausgegeben werden muss oder nicht.

6. Verfahren nach einem der vorhergehenden Ansprüche, **dadurch gekennzeichnet, dass** der wenigstens eine Funktions-Einstellparameter der Diagnosefunktion (27, 29) durch den erlaubten Maximalwert und/oder durch den erlaubten Minimalwert für die ermittelte Versorgungsspannung des Rußsensors (5, A, B) gebildet ist, und/oder dass der wenigstens eine Einstell-Funktionsparameter der Diagnosefunktion (27, 29) durch einen plausiblen Maximalwert und/oder durch einen plausiblen Minimalwert für das Rußsensor-Messsignal gebildet ist.

7. Verfahren nach einem der vorhergehenden Ansprüche, **dadurch gekennzeichnet, dass** die Kennwert-Berechnungsfunktion (25) zur Ermittlung der Ruß-Leistungs-Kennwerte eine in dem Steuergerät gespeicherte Kennlinie (36, 41) aufweist, die den Zusammenhang zwischen dem Messsignal des Rußsensors (5, A, B) oder einer aus dem Messsignal abgeleiteten Größe und dem an dem Rußsensor (5, A, B) vorbeiströmenden Rußmassenstrom beschreibt, wobei der Verlauf der Kennlinie (36, 41) durch mehrere in dem Steuergerät (6) gespeicherte Stützstellen (39) festgelegt ist, und wobei der wenigstens eine Einstell-Funktionsparameter der Kennwert-Berechnungsfunktion (25) durch eine einstellbare X-Position und/oder durch eine einstellbare Y-Position wenigstens einer Stützstelle der Kennlinie (36, 41) gebildet ist.

8. Verfahren nach Anspruch 7, **dadurch gekennzeichnet, dass** die X-Position der jeweiligen Stützstelle (39) durch einen Messsignal-Wert und die Y-Position der jeweiligen Stützstelle (39) durch einen Rußmassenstrom-Wert definiert ist, und/oder dass die X-Position und die Y-Position von zumindest einem Teil der Stützstellen (39), insbesondere von jeder Stützstelle (39), Einstell-Funktionsparameter der Kennwert-Berechnungsfunktion (25) ausbilden.

9. Verfahren nach einem der vorhergehenden Ansprüche, **dadurch gekennzeichnet, dass** der wenigstens eine Einstell-Funktionsparameter der Kennwert-Berechnungsfunktion (25) durch die Auswertestrategie zur Auswertung des von dem Rußsensor (5, A, B) ausgegebenen Messsignals gebildet ist.

10. Verfahren nach einem der vorhergehenden Ansprüche, **dadurch gekennzeichnet, dass** der anschließbare Rußsensor (5, A, B) mittels einer lösbaren CAN-Bus-Verbindung lösbar und signalübertagend mit dem Steuergerät (6) verbindbar ist.

11. Verfahren nach einem der vorhergehenden Ansprüche, **dadurch gekennzeichnet, dass** die Einstelleinrichtung (37) durch ein von dem Steuergerät (6) separates, insbesondere mobiles, Gerät gebildet ist, das an das Steuergerät (6) anschließbar ist, wobei bevorzugt vorgesehen ist, dass die einzustellenden Parameterwerte für den angeschlossenen Rußsensor (5, A, B), insbesondere für mehrere und/oder alle anschließbaren Rußsensoren, in einer Speichereinrichtung (43) der separaten Einstelleinrichtung (37) gespeichert sind.

12. Verfahren nach einem der Ansprüche 1 bis 10, **dadurch gekennzeichnet, dass** die Einstelleinrichtung (37) Bestandteil des Steuergeräts (6) ist, wobei bevorzugt vorgesehen ist, dass die einzustellenden Parameterwerte für den angeschlossenen Rußsensor (5, A, B), insbesondere für mehrere und/oder alle anschließbaren Rußsensoren, in einer Speichereinrichtung (43) des Steuergeräts (6) gespeichert sind.

13. Verfahren nach Anspruch 12, **dadurch gekennzeichnet, dass** das Steuergerät (6) eine Sensor-Erkennungseinrichtung (45) aufweist, mittels der der an das Steuergerät (6) angeschlossene Sensortyp erkennbar und/oder erfassbar ist, und/dass die für den erfassten Sensortyp einzustellenden Parameterwerte selbsttätig mittels der steuergerätseitigen Einstellenrichtung (37) eingestellt werden.

14. Steuergerät zur Überprüfung der Funktion eines Partikelfilters, insbesondere eines Dieselpartikelfilters, eines mit einer Brennkraftmaschine verbundenen Abgasstrangs, mit einer Anschlusseinrichtung, mittels der ein Rußsensor (5, A, B) lösbar und signalübertragend an das Steuergerät anschließbar ist, wobei der Rußsensor (5, A, B) Bestandteil einer Sensoreinheit (7) ist und wobei die Sensoreinheit (7) neben dem Rußsensor (5, A, B) eine signalübertragend mit dem Rußsensor (7) verbundene Sensor-Steuereinrichtung (8) aufweist, mittels der das analoge Messsignal des Rußsensors (5, A, B) in ein digitales Signal umgewandelt wird, wobei mittels des Rußsensors (5, A, B) der von dem Partikelfilter (4) durchgelassene und somit an dem Rußsensor (5, A, B) vorbeiströmende Rußmassenstrom ermittelbar und/oder messbar ist,
wobei das Steuergerät (6) eine Signal-Verarbeitungseinrichtung (22) mit einer Kennwert-Berechnungsfunktion aufweist, wobei mittels der Kennwert-Berechnungsfunktion (25) aus dem ermittelten Rußmassenstrom und der, insbesondere mit dem Steuergerät (6) ermittelten, eingesetzten Antriebsleistung der Brennkraftmaschine (2) Ruß-Leistungs-Kennwerte ermittelbar sind, bei denen der von dem Partikelfilter durchgelassene Rußmassenstrom in Relation zur Brennkraftmaschinen-Antriebsleistung gesetzt ist, wobei mittels der Signal-Verarbeitungseinrichtung (22) zudem ermittelbar ist, ob die ermittelten Ruß-Leistungs-Kennwerte einen definierten Ruß-Leistungs-Grenzwert überschreiten,
wobei die Signal-Verarbeitungseinrichtung (22) zudem wenigstens eine Diagnosefunktion (27, 29) aufweist, mittels der die Funktion des Rußsensors (5, A, B) überprüfbar ist, wobei die Signal-Verarbeitungseinrichtung eine Zustandsfunktion aufweist, mittels der der aktuelle Zustand des Rußsensors erfassbar und wenigstens ein Steuerbefehl zur gezielten Ansteuerung des Russsensors ermittelbar und/oder ausgebbar ist,
wobei die Kennwert-Berechnungsfunktion, die wenigstens eine Diagnosefunktion (27, 29) und die Zustandsfunktion (31) jeweils eine nicht verstellbare Funktionsbasis und wenigstens einen verstellbaren Einstell-Funktionsparameter aufweisen, wobei diese Funktionen derart ausgebildet sind, dass diese nur durch Einstellung der Einstell-Funktionsparameter an unterschiedliche an das Steuergerät anschließbare Sensortypen anpassbar sind, wobei das Steuergerät eine Einstelleinrichtung aufweist oder eine von dem Steuergerät separate Einstelleinrichtung an das Steuergerät anschließbar ist, wobei mittels der jeweiligen Einstelleinrichtung die Parameterwerte der Einstell-Funktionsparameter in Abhängigkeit vom angeschlossenen Sensortyp einstellbar sind.

15. Vorrichtung zur Überprüfung der Funktion eines Partikelfilters, insbesondere eines Dieselpartikelfilters, eines mit einer Brennkraftmaschine verbundenen Abgasstrangs,
mit einer Verbindungseinrichtung, mittels der ein Rußsensor (5, A, B), der Bestandteil einer Sensoreinheit (7) ist, lösbar und signalübertragend mit einem Steuergerät (6) verbindbar ist, wobei die Sensoreinheit (7) neben dem Rußsensor (5, A, B) eine signalübertragend mit dem Rußsensor (7) verbundene Sensor-Steuereinrichtung (8) aufweist, mittels der das analoge Messsignal des Rußsensors (5, A, B) in ein digitales Signal umgewandelt wird,
wobei der Rußsensor (5, A, B), in Abgas-Strömungsrichtung gesehen, stromab des Partikelfilters (4) angeordnet ist, dergestalt, dass mittels des Rußsensors (5, A, B) der von dem Partikelfilter (4) durchgelassene und somit an dem Rußsensor (5, A, B) vorbeiströmende Rußmassenstrom messbar und/oder ermittelbar ist,
wobei das Steuergerät (6) eine Signal-Verarbeitungseinrichtung (22) mit einer Kennwert-Berechnungsfunktion (25) aufweist, wobei mittels der Kennwert-Berechnungsfunktion aus dem ermittelten Rußmassenstrom und der, insbesondere mit dem Steuergerät (6) ermittelten, eingesetzten Antriebsleistung der Brennkraftmaschine (2) Ruß-Leistungs-Kennwerte ermittelbar sind, bei denen der von dem Partikelfilter durchgelassene Rußmassenstrom in Relation zur Brennkraftmaschinen-Antriebsleistung gesetzt ist, wobei mittels der Signal-Verarbeitungseinrichtung (22) zudem ermittelbar ist, ob die ermittelten Ruß-Leistungs-Kennwerte einen definierten Ruß-Leistungs-Grenzwert überschreiten,
wobei die Signal-Verarbeitungseinrichtung (22) zudem wenigstens eine Diagnosefunktion (27, 29) aufweist, mittels der die Funktion des Rußsensors (5, A, B) überprüfbar ist, wobei die Signal-Verarbeitungseinrichtung (22) eine Zustandsfunktion aufweist, mittels der der aktuelle Zustand des Rußsensors (5, A, B) erfassbar und wenigstens ein Steuerbefehl zur gezielten Ansteuerung des Rußsensors (5, A, B) ermittelbar und/oder ausgebbar ist,
wobei die Kennwert-Berechnungsfunktion (25), die wenigstens eine Diagnosefunktion (27, 29) und die Zustandsfunktion (31) jeweils eine nicht verstellbare Funktionsbasis und wenigstens einen verstellbaren Einstell-Funktionsparameter aufweisen, wobei diese Funktionen derart ausgebildet sind, dass diese nur durch Einstellung der Einstell-Funktionsparameter an unterschiedliche an das Steuergerät anschließbare Sensortypen anpassbar sind, wobei eine Einstelleinrichtung (37) vorgesehen ist, mittels der die Parameterwerte der Einstell-Funktionsparameter in Abhängigkeit vom angeschlossenen Sensortyp einstellbar sind.

16. Fahrzeug, insbesondere Nutzfahrzeug, mit einer Vorrichtung nach Anspruch 15.

## Claims

1. Method for adapting a control unit to a soot sensor which can be connected to the control unit and is used to monitor the function of a particle filter, in particular a diesel particle filter, of an exhaust tract connected to an internal combustion engine,
wherein the soot mass flow let through by the particle filter (4) and therefore flowing past the soot sensor (5, A, B) can be measured and/or determined by means of the connectable soot sensor (5, A, B),
wherein the control unit (6) has a signal processing device (22) having a characteristic value calculation function (25), wherein soot performance characteristic values can be determined by means of the characteristic value calculation function (25) from the determined soot mass flow and the drive power used by the internal combustion engine (2), in particular determined using the control unit (6), in which characteristic values the soot mass flow let through by the particle filter is related to the internal combustion engine drive power, wherein the signal processing device (22) can also be used to determine whether the determined soot performance characteristic values exceed a defined soot performance limit value,
wherein the signal processing device (22) also has at least one diagnostic function (27, 29) which can be used to check the function of the soot sensor (5), wherein the signal processing device (22) has a state function (31) which can be used to capture the current state of the soot sensor (5, A, B) and to determine and/or output at least one control command for the targeted control of the soot sensor (5, A, B),
wherein the characteristic value calculation function (25), the at least one diagnostic function (27, 29) and the state function (31) each have a non-adjustable functional basis and at least one adjustable setting functional parameter, wherein these functions are designed in such a manner that they can be adapted to different sensor types (5) which can be connected to the control unit (6) only by setting the setting functional parameters,
wherein a setting device (37) is provided and is used to set the parameter values of the setting functional parameters on the basis of the connected sensor type (5, A, B), and
wherein the soot sensor (5, A, B) is part of a sensor unit (7), wherein, in addition to the soot sensor (5, A, B), the sensor unit (7) has a sensor control device (8) which is connected to the soot sensor (7) in a signal-transmitting manner and is used to convert the analogue measurement signal from the soot sensor (5, A, B) into a digital signal.

2. Method according to Claim 1, **characterized in that** the soot sensors (5, A, B) which can be connected to the control unit (6) are formed by resistive soot sensors, wherein provision is preferably made for the resistive soot sensors (5, A, B) which can be connected to the control unit (6) to output an electrical voltage signal, an electrical current intensity signal or an electrical resistance signal as the measurement signal.

3. Method according to Claim 2, **characterized in that** the functions have in total fewer than 160 setting functional parameters, wherein provision is preferably made for the number of setting functional parameters in total to be in a range of 130 to 155, preferably in a range of 140 to 150, particularly preferably in a range of 141 to 145.

4. Method according to Claim 2 or 3, **characterized in that** the at least one setting functional parameter of the diagnostic function (27, 29) is formed by a plausible maximum value and/or by a plausible minimum value for the determined soot load of the resistive soot sensor (5, A, B).

5. Method according to one of Claims 2 to 4, **characterized in that** the at least one setting functional parameter of the state function (31) is formed by the information regarding whether or not a control command must be output by the control unit (6) to the soot sensor (5, A, B) in order to regenerate the resistive soot sensor (5, A, B).

6. Method according to one of the preceding claims, **characterized in that** the at least one functional setting parameter of the diagnostic function (27, 29) is formed by the permitted maximum value and/or by the permitted minimum value for the determined supply voltage of the soot sensor (5, A, B), and/or **in that** the at least one setting functional parameter of the diagnostic function (27, 29) is formed by a plausible maximum value and/or by a plausible minimum value for the soot sensor measurement signal.

7. Method according to one of the preceding claims, **characterized in that** the characteristic value calculation function (25) has, in order to determine the soot performance characteristic values, a characteristic curve (36, 41) which is stored in the control unit and describes the relationship between the measurement signal from the soot sensor (5, A, B) or a variable derived from the measurement signal and the soot mass flow flowing past the soot sensor (5, A, B), wherein the profile of the characteristic curve (36, 41) is determined by a plurality of supporting points (39) stored in the control unit (6), and wherein the at least one setting functional parameter of the characteristic value calculation function (25) is formed by a settable X position and/or by a settable Y position of at least one supporting point of the characteristic curve (36, 41).

8. Method according to Claim 7, **characterized in that** the X position of the respective supporting point (39) is defined by a measurement signal value and the Y position of the respective supporting point (39) is defined by a soot mass flow value, and/or **in that** the X position and the Y position of at least some of the supporting points (39), in particular of each supporting point (39), form setting functional parameters of the characteristic value calculation function (25).

9. Method according to one of the preceding claims, **characterized in that** the at least one setting functional parameter of the characteristic value calculation function (25) is formed by the evaluation strategy for evaluating the measurement signal output by the soot sensor (5, A, B).

10. Method according to one of the preceding claims, **characterized in that** the connectable soot sensor (5, A, B) can be connected to the control unit (6) in a releasable and signal-transmitting manner by means of a releasable CAN bus connection.

11. Method according to one of the preceding claims, **characterized in that** the setting device (37) is formed by a device which is separate from the control unit (6), in particular a mobile device, which can be connected to the control unit (6), wherein provision is preferably made for the parameter values to be set for the connected soot sensor (5, A, B), in particular for a plurality of and/or all connectable soot sensors, to be stored in a storage device (43) of the separate setting device (37).

12. Method according to one of Claims 1 to 10, **characterized in that** the setting device (37) is part of the control unit (6), wherein provision is preferably made for the parameter values to be set for the connected soot sensor (5, A, B), in particular for a plurality of and/or all connectable soot sensors, to be stored in a storage device (43) of the control unit (6).

13. Method according to Claim 12, **characterized in that** the control unit (6) has a sensor detection device (45) which can be used to detect and/or capture the sensor type connected to the control unit (6), and/or **in that** the parameter values to be set for the captured sensor type are automatically set by means of the setting device (37) on the control unit side.

14. Control unit for checking the function of a particle filter, in particular a diesel particle filter, of an exhaust tract connected to an internal combustion engine, having a connection device which can be used to connect a soot sensor (5, A, B) to the control unit in a releasable and signal-transmitting manner, wherein the soot sensor (5, A, B) is part of a sensor unit (7), and wherein, in addition to the soot sensor (5, A, B), the sensor unit (7) has a sensor control device (8) which is connected to the soot sensor (7) in a signal-transmitting manner and is used to convert the analogue measurement signal from the soot sensor (5, A, B) into a digital signal, wherein the soot mass flow let through by the particle filter (4) and therefore flowing past the soot sensor (5, A, B) can be determined and/or measured by means of the soot sensor (5, A, B),
wherein the control unit (6) has a signal processing device (22) having a characteristic value calculation function, wherein soot performance characteristic values can be determined by means of the characteristic value calculation function (25) from the determined soot mass flow and the drive power used by the internal combustion engine (2), in particular determined using the control unit (6), in which characteristic values the soot mass flow let through by the particle filter is related to the internal combustion engine drive power, wherein the signal processing device (22) can also be used to determine whether the determined soot performance characteristic values exceed a defined soot performance limit value,
wherein the signal processing device (22) also has at least one diagnostic function (27, 29) which can be used to check the function of the soot sensor (5, A, B), wherein the signal processing device has a state function which can be used to capture the current state of the soot sensor and to determine and/or output at least one control command for the targeted control of the soot sensor,
wherein the characteristic value calculation function, the at least one diagnostic function (27, 29) and the state function (31) each have a non-adjustable functional basis and at least one adjustable setting functional parameter, wherein these functions are designed in such a manner that they can be adapted to different sensor types which can be connected to the control unit only by setting the setting functional parameters, wherein the control unit has a setting device or a setting device which is separate from the control unit can be connected to the control unit, wherein the respective setting device can be used to set the parameter values of the setting functional parameters on the basis of the connected sensor type.

15. Apparatus for checking the function of a particle filter, in particular a diesel particle filter, of an exhaust tract connected to an internal combustion engine,
having a connecting device which can be used to connect a soot sensor (5, A, B), which is part of a sensor unit (7), to a control unit (6) in a releasable and signal-transmitting manner, wherein, in addition to the soot sensor (5, A, B), the sensor unit (7) has a sensor control device (8) which is connected to the soot sensor (7) in a signal-transmitting manner and is used to convert the analogue measurement signal from the soot sensor (5, A, B) into a digital signal,
wherein the soot sensor (5, A, B), as seen in the exhaust gas direction of flow, is arranged downstream of the particle filter (4) in such a manner that the soot mass flow let through by the particle filter (4) and therefore flowing past the soot sensor (5, A, B) can be measured and/or determined by means of the soot sensor (5, A, B),
wherein the control unit (6) has a signal processing device (22) having a characteristic value calculation function (25), wherein soot performance characteristic values can be determined by means of the characteristic value calculation function from the determined soot mass flow and the drive power used by the internal combustion engine (2), in particular determined using the control unit (6), in which characteristic values the soot mass flow let through by the particle filter is related to the internal combustion engine drive power, wherein the signal processing device (22) can also be used to determine whether the determined soot performance characteristic values exceed a defined soot performance limit value,
wherein the signal processing device (22) also has at least one diagnostic function (27, 29) which can be used to check the function of the soot sensor (5, A, B), wherein the signal processing device (22) has a state function which can be used to capture the current state of the soot sensor (5, A, B) and to determine and/or output at least one control command for the targeted control of the soot sensor (5, A, B),
wherein the characteristic value calculation function (25), the at least one diagnostic function (27, 29) and the state function (31) each have a non-adjustable functional basis and at least one adjustable setting functional parameter, wherein these functions are designed in such a manner that they can be adapted to different sensor types which can be connected to the control unit only by setting the setting functional parameters, wherein a setting device (37) is provided and can be used to set the parameter values of the setting functional parameters on the basis of the connected sensor type.

16. Vehicle, in particular commercial vehicle, having an apparatus according to Claim 15.

## Revendications

1. Procédé d'adaptation d'un appareil de commande à un capteur de suie pouvant être connecté à l'appareil de commande et servant à surveiller le fonctionnement d'un filtre à particules, en particulier d'un filtre à particules diesel, d'une ligne de gaz d'échappement reliée à un moteur à combustion interne,
dans lequel le capteur de suie pouvant être connecté (5, A, B) permet de mesurer et/ou déterminer le débit massique de suie transmis par le filtre à particules (4) et passant donc devant le capteur de suie (5, A, B),
dans lequel l'appareil de commande (6) présente un dispositif de traitement de signal (22) ayant une fonction de calcul de valeur caractéristique (25), la fonction de calcul de valeur caractéristique (25) permettant de déterminer à partir du débit massique de suie déterminé et de la puissance d'entraînement du moteur à combustion interne (2) mise en œuvre, en particulier déterminée par l'appareil de commande (6), des valeurs caractéristiques de performance pour la suie avec lesquelles le débit massique de suie transmis par le filtre à particules est mis en relation avec la puissance d'entraînement du moteur à combustion interne, le dispositif de traitement de signal (22) permettant de plus de déterminer si les valeurs caractéristiques de performance pour la suie dépassent une valeur limite de performance pour la suie définie,
dans lequel le dispositif de traitement de signal (22) présente de plus au moins une fonction de diagnostic (27, 29) permettant de vérifier le fonctionnement du capteur de suie (5), le dispositif de traitement de signal (22) présentant une fonction d'état (31) permettant de détecter l'état actuel du capteur de suie (5, A, B) et de déterminer et/ou de délivrer au moins un ordre de commande pour un pilotage ciblé du capteur de suie (5, A, B),
dans lequel la fonction de calcul de valeur caractéristique (25), ladite au moins une fonction de diagnostic (27, 29) et la fonction d'état (31) présentent respectivement une base de fonction invariable et au moins un paramètre de fonction de réglage variable, ces fonctions étant réalisées de telle sorte que seul le réglage des paramètres de fonction de réglage permet de les adapter à différents types de capteur (5) pouvant être connectés à l'appareil de commande (6),
dans lequel un dispositif de réglage (37) est prévu qui permet de régler les valeurs de paramètre des paramètres de fonction de réglage en fonction du type de capteur connecté (5, A, B), et
dans lequel le capteur de suie (5, A, B) fait partie d'une unité de capteur (7), l'unité de capteur (7) présentant en plus du capteur de suie (5, A, B) un dispositif de commande de capteur (8) relié au capteur de suie (7) de manière à transmettre des signaux et servant à convertir le signal de mesure analogique du capteur de suie (5, A, B) en signal numérique.

2. Procédé selon la revendication 1, **caractérisé en ce que** les capteurs de suie (5, A, B) pouvant être connectés à l'appareil de commande (6) sont formés par des capteurs de suie résistifs, dans lequel il est prévu de préférence que les capteurs de suie résistifs (5, A, B) pouvant être connectés à l'appareil de commande (6) délivrent comme signal de mesure un signal de tension électrique, un signal d'intensité de courant électrique ou un signal de résistance électrique.

3. Procédé selon la revendication 2, **caractérisé en ce que** les fonctions présentent au total moins de 160 paramètres de fonction de réglage, dans lequel il est prévu de préférence que le nombre des paramètres de fonction de réglage soit compris au total dans une plage de 130 à 155, de préférence dans une plage de 140 à 150, de plus grande préférence dans une plage de 141 à 145.

4. Procédé selon la revendication 2 ou 3, **caractérisé en ce que** ledit au moins un paramètre de fonction de réglage de la fonction de diagnostic (27, 29) est formé par une valeur maximale plausible et/ou par une valeur minimale plausible pour la charge en suie déterminée du capteur de suie résistif (5, A, B).

5. Procédé selon l'une quelconque des revendications 2 à 4, **caractérisé en ce que** ledit au moins un paramètre de fonction de réglage de la fonction d'état (31) est formé par l'information indiquant si un ordre de commande pour la régénération du capteur de suie résistif (5, A, B) doit ou non être délivré au capteur de suie (5, A, B) par l'appareil de commande (6).

6. Procédé selon l'une quelconque des revendications précédentes, **caractérisé en ce que** ledit au moins un paramètre de fonction de réglage de la fonction de diagnostic (27, 29) est formé par la valeur maximale autorisée et/ou par la valeur minimale autorisée pour la tension d'alimentation déterminée du capteur de suie (5, A, B), et/ou **en ce que** ledit au moins un paramètre de fonction de réglage de la fonction de diagnostic (27, 29) est formé par une valeur maximale plausible et/ou par une valeur minimale plausible pour le signal de mesure de capteur de suie.

7. Procédé selon l'une quelconque des revendications précédentes, **caractérisé en ce que** la fonction de calcul de valeur caractéristique (25) présente pour la détermination des valeurs caractéristiques de performance pour la suie une courbe caractéristique (36, 41) stockée dans l'appareil de commande et qui décrit la relation entre le signal de mesure du capteur de suie (5, A, B) ou une grandeur dérivée du signal de mesure et le débit massique de suie passant devant le capteur de suie (5, A, B), l'allure de la courbe caractéristique (36, 41) étant établie par plusieurs points d'ancrage (39) stockés dans l'appareil de commande (6), et ledit au moins un paramètre de fonction de réglage de la fonction de calcul de valeur caractéristique (25) étant formé par une position X réglable et/ou par une position Y réglable d'au moins un point d'ancrage de la courbe caractéristique (36, 41).

8. Procédé selon la revendication 7, **caractérisé en ce que** la position X du point d'ancrage respectif (39) est définie par une valeur de signal de mesure et la position Y du point d'ancrage respectif (39) est définie par une valeur de débit massique de suie, et/ou **en ce que** la position X et la position Y d'au moins une partie des points d'ancrage (39), en particulier de chaque point d'ancrage (39), constituent des paramètres de fonction de réglage de la fonction de calcul de valeur caractéristique (25).

9. Procédé selon l'une quelconque des revendications précédentes, **caractérisé en ce que** ledit au moins un paramètre de fonction de réglage de la fonction de calcul de valeur caractéristique (25) est formé par la stratégie d'évaluation pour évaluer le signal de mesure délivré par le capteur de suie (5, A, B).

10. Procédé selon l'une quelconque des revendications précédentes, **caractérisé en ce que** le capteur de suie (5, A, B) pouvant être connecté peut être relié à l'appareil de commande (6) de manière amovible et à transmettre des signaux au moyen d'une liaison de bus CAN amovible.

11. Procédé selon l'une quelconque des revendications précédentes, **caractérisé en ce que** le dispositif de réglage (37) est formé par un appareil, en particulier mobile, séparé de l'appareil de commande (6), et qui peut être connecté à l'appareil de commande (6), dans lequel il est prévu de préférence que les valeurs de paramètre à régler pour le capteur de suie (5, A, B) connecté, en particulier pour plusieurs et/ou tous les capteurs de suie pouvant être connectés, soient stockées dans un dispositif de stockage (43) du dispositif de réglage séparé (37).

12. Procédé selon l'une quelconque des revendications 1 à 10, **caractérisé en ce que** le dispositif de réglage (37) fait partie de l'appareil de commande (6), dans lequel il est prévu de préférence que les valeurs de paramètre à régler pour le capteur de suie (5, A, B) connecté, en particulier pour plusieurs et/ou tous les capteurs de suie pouvant être connectés, soient stockées dans un dispositif de stockage (43) de l'appareil de commande (6).

13. Procédé selon la revendication 12, **caractérisé en ce que** l'appareil de commande (6) présente un dispositif de reconnaissance de capteur (45) qui permet de reconnaître et/ou de détecter le type de capteur connecté à l'appareil de commande (6), et **en ce que** les valeurs de paramètre à régler pour le type de capteur détecté sont réglées automatiquement au moyen du dispositif de réglage (37) côté appareil de commande.

14. Appareil de commande pour vérifier le fonctionnement d'un filtre à particules, en particulier d'un filtre à particules diesel, d'une ligne de gaz d'échappement reliée à un moteur à combustion interne, comprenant un dispositif de connexion permettant de connecter un capteur de suie (5, A, B) de manière amovible et à transmettre des signaux à l'appareil de commande, le capteur de suie (5, A, B) faisant partie d'une unité de capteur (7), et l'unité de capteur (7) présentant en plus du capteur de suie (5, A, B) un dispositif de commande de capteur (8) relié au capteur de suie (7) de manière à transmettre des signaux et permettant de convertir le signal de mesure analogique du capteur de suie (5, A, B) en signal numérique, le capteur de suie (5, A, B) permettant de déterminer et/ou de mesurer le débit massique de suie transmis par le filtre à particules (4) et passant donc devant le capteur de suie (5, A, B),
dans lequel l'appareil de commande (6) présente un dispositif de traitement de signal (22) ayant une fonction de calcul de valeur caractéristique, la fonction de calcul de valeur caractéristique (25) permettant de déterminer à partir du débit massique de suie déterminé et de la puissance d'entraînement du moteur à combustion interne (2) mise en œuvre, en particulier déterminée par l'appareil de commande (6), des valeurs caractéristiques de performance pour la suie avec lesquelles le débit massique de suie transmis par le filtre à particules est mis en relation avec la puissance d'entraînement du moteur à combustion interne, le dispositif de traitement de signal (22) permettant de plus de déterminer si les valeurs caractéristiques de performance pour la suie dépassent une valeur limite de performance pour la suie définie,
dans lequel le dispositif de traitement de signal (22) présente de plus au moins une fonction de diagnostic (27, 29) permettant de vérifier le fonctionnement du capteur de suie (5, A, B), le dispositif de traitement de signal présentant une fonction d'état permettant de détecter l'état actuel du capteur de suie et de déterminer et/ou de délivrer au moins un ordre de commande pour le pilotage ciblé du capteur de suie,
dans lequel la fonction de calcul de valeur caractéristique, ladite au moins une fonction de diagnostic (27, 29) et la fonction d'état (31) présentent respectivement une base de fonction invariable et au moins un paramètre de fonction de réglage variable, ces fonctions étant réalisées de telle sorte que seul le réglage des paramètres de fonction de réglage permet de les adapter à différents types de capteur pouvant être connectés à l'appareil de commande, dans lequel l'appareil de commande présente un dispositif de réglage ou un dispositif de réglage séparé de l'appareil de commande peut être connecté à l'appareil de commande, le dispositif de réglage respectif permettant de régler les valeurs de paramètre des paramètres de fonction de réglage en fonction du type de capteur connecté.

15. Dispositif de vérification du fonctionnement d'un filtre à particules, en particulier d'un filtre à particules diesel, d'une ligne de gaz d'échappement reliée à un moteur à combustion interne,
comprenant un dispositif de liaison permettant de relier de manière amovible et à transmettre des signaux un capteur de suie (5, A, B) faisant partie d'une unité de capteur (7) à un appareil de commande (6), l'unité de capteur (7) présentant en plus du capteur de suie (5, A, B) un dispositif de commande de capteur (8) connecté au capteur de suie (7) de manière à transmettre des signaux et permettant de convertir le signal de mesure analogique du capteur de suie (5, A, B) en signal numérique,
dans lequel le capteur de suie (5, A, B), vu dans la direction d'écoulement des gaz d'échappement, est disposé en aval du filtre à particules (4) de telle sorte que le capteur de suie (5, A, B) permet de mesurer et/ou de déterminer le débit massique de suie transmis par le filtre à particules (4) et passant donc devant le capteur de suie (5, A, B),
dans lequel l'appareil de commande (6) présente un dispositif de traitement de signal (22) ayant une fonction de calcul de valeur caractéristique (25), la fonction de calcul de valeur caractéristique permettant de déterminer à partir du débit massique de suie déterminé et de la puissance d'entraînement du moteur à combustion interne (2) mise en œuvre, en particulier déterminée par l'appareil de commande (6), des valeurs caractéristiques de performance pour la suie avec lesquelles le débit massique de suie transmis par le filtre à particules est mis en relation avec la puissance d'entraînement du moteur à combustion interne, le dispositif de traitement de signal (22) permettant de plus de déterminer si les valeurs caractéristiques de performance pour la suie dépassent une valeur limite de performance pour la suie définie,
dans lequel le dispositif de traitement de signal (22) présente de plus au moins une fonction de diagnostic (27, 29) permettant de vérifier le fonctionnement du capteur de suie (5, A, B), le dispositif de traitement de signal (22) présentant une fonction d'état permettant de détecter l'état actuel du capteur de suie (5, A, B) et de déterminer et/ou de délivrer au moins un ordre de commande pour le pilotage ciblé du capteur de suie (5, A, B),
dans lequel la fonction de calcul de valeur caractéristique (25), ladite au moins une fonction de diagnostic (27, 29) et la fonction d'état (31) présentent respectivement une base de fonction invariable et au moins un paramètre de fonction de réglage variable, ces fonctions étant réalisées de telle sorte que seul le réglage des paramètres de fonction de réglage permet de les adapter à différents types de capteur pouvant être connectés à l'appareil de commande, dans lequel un dispositif de réglage (37) est prévu qui permet de régler les valeurs de paramètre des paramètres de fonction de réglage en fonction du type de capteur connecté.

16. Véhicule, en particulier véhicule utilitaire, comprenant un dispositif selon la revendication 15.
